# EUROPEAN PATENT APPLICATION

(11) **EP 3 654 658 A1**
(43) Date of publication of application: **20.05.2020**
(21) Application number: 18206443.6
(22) Date of filing: 15.11.2018
(51) Int. Cl.: H04N 21/454

(54) **CONTENT FILTERING OF A MULTIMEDIA STREAM**

(71) Applicant: Nagravision SA, 1033 Cheseaux-sur-Lausanne (CH)
(72) Inventor: OWEN, William John, 1033 Cheseaux-sur-Lausanne (CH); HOLBROOK, Craig, 1033 Cheseaux-sur-Lausanne (CH)
(74) Representative: Schwegman Lundberg Woessner Limited

(57) **Abstract**

A computer-implemented method and a device for filtering media content are disclosed. In the method, the media stream is received, for example at a control device such as a television or set top box connected to a television, or a mobile device. The media stream comprises content, e.g. TV shows, adverts, video game live streams, sports matches and movies, and the content includes a portion to be filtered. An indication is also received, the indication being of a time span of when the portion to be filtered occurs in the media stream. The media stream is then filtered based on the indication of the time span, and the filtered media stream is output for playback, e.g. to a television.

## Description

### FIELD

The present disclosure relates to content control and in particular to filtering content from a media stream.

### BACKGROUND

Content control for media content is typically applied by setting user preferences at a control device such as a television or set top box connected to a television, or a mobile device. For example, a user may set a minimum age rating, access times and/or restricted channels that cause entire content items, e.g. episodes of a TV show or a film, to be blocked from being shown on the television.

### BRIEF DESCRIPTION OF THE DRAWINGS

Figure 1 illustrates a block diagram of a system for content control;
Figure 2 illustrates a method of content control;
Figure 3 illustrates a representation of identification of content to be filtered from a media stream using a version of the media stream sent in advance;
Figure 4 illustrates a representation of identification of content to be filtered from a media stream using a remote server;
Figure 5 illustrates a representation of identification of content to be filtered from Video On Demand content;
Figure 6 illustrates a representation of a control device receiving Video On Demand content with content to be filtered; and
Figure 7 illustrates a block diagram of one implementation of a computing device.

### DETAILED DESCRIPTION OF THE DRAWINGS

In overview, a computer-implemented method of filtering media content is disclosed. The media stream is received, for example at a control device such as a television or set top box connected to a television, or a mobile device. The media stream comprises content, e.g. TV shows, adverts, video game live streams, sports matches and movies, and the content includes a portion to be filtered. An indication is also received, the indication being of a time span of when the portion to be filtered occurs in the media stream. The media stream is then filtered based on the indication of the time span, and the filtered media stream is output for playback, e.g. to a television.

Filtering may be carried out to skip or block content that is not appropriate for some viewers such as violent scenes, explicit language and obscene/explicit scenes. Receiving an indication of a time span may comprise receiving, prior to receiving the media stream, a version of the media stream. The version of the media stream may comprise the content of the media stream at a time offset ahead in time relative to the content of the media stream. For example, a TV show in the media stream may be delayed by a few seconds relative to the TV show in the version of the media stream. The version of the media stream may comprise a lower data rate than the media stream.

The method may comprise detecting the time span in the version of the media stream. For example, if the version of the media stream comprises an audio stream, detecting the time span may comprise performing audio and/or speech recognition on the audio stream to identify keywords or sounds from the audio stream.

Additionally or alternatively, if the version of the media stream comprises a video stream, detecting the time span may comprise identifying patterns from the video stream. For example, image recognition could be used to detect guns, blood, explosions or sex scenes from the video stream. Similarly, if the version of the media stream comprises a subtitle stream, detecting the time span may comprise identifying keywords from the subtitle stream. Keywords may be maintained in a blacklist at the control device.

Receiving an indication of a time span may comprise detecting the time span in the received media stream. Similarly to detection from the version of the media stream, if the media stream comprises an audio stream, detecting the time span may comprise performing audio and/or speech recognition on the audio stream to identify keywords or sounds from the audio stream.

Receiving an indication of a time span may comprise receiving data comprising a start time of the time span and an end time of the time span. The start and end times may be with reference to Coordinated Universal Time (or any other time zone), a time code in the media stream or a time relative to the start of a content item in the media stream. The start time of the time span and the end time of the time span may both be within one content item in the media stream. In other words, the portion to be filtered may be part of one TV episode or a film.

Advantageously, these methods enable part of a content item rather than a whole content item to be filtered. This enables, for example, the story of a movie to be enjoyed with any sex scenes filtered out without having to store multiple versions of the content item with different portions filtered out. Further, detecting the time span in the lower data rate version of the media stream enables filtering to be carried out on content without requiring the content to be reviewed for any content to be filtered prior to broadcast or transmission of the media stream.

Further aspects of the disclosure relate to a system comprising a processor configured to perform the steps of the method described above, a non-transitory computer readable medium having computer-executable instructions to cause a computer system to perform the steps of the method as described above, and a computer program product comprising instructions which, when the program is executed by a computer, cause the computer to carry out the steps of the method as described above.

Some specific embodiments are now described by way of illustration with reference to the accompanying drawings in which like reference numerals refer to like features.

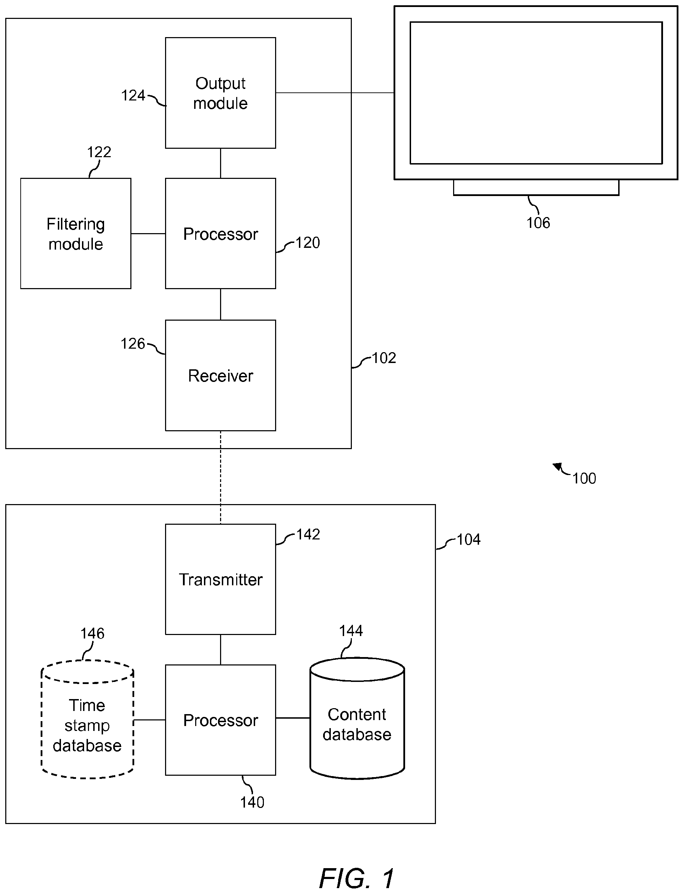

With reference to Figure 1, the system 100 comprises a control device 102 such as a set top box, a server or a smartphone, a content system 104 and a display device 106 such as a television or smartphone. The content system 104 is connected to the control device 102, and the control device 102 is connected to the display device 106. For example, if the control device is a server and the display device is a smartphone, then the server and the display device may be connected via a network such as the internet, or if the control device is a set top box and the display device is a television, then the set top box and the television may be connected via a wired connection or a wireless connection.

In some embodiments, the control device 102 and the display device 106 are integrated into the same device, e.g. a smartphone, a tablet, a smart TV, or a personal computer such as a laptop.

The content system 104 is arranged to transmit media streams, e.g. by broadcasting or over the internet, to the control device 102 which processes the media stream for output to the display device 106.

The control device 102 comprises a processor 120, a filtering module 122, an output module 124 and a receiver 126. The filtering module 122, the output module 124 and the receiver 126 are each operatively connected to the processor 120. The receiver 126 is arranged to receive media streams containing content items from the content system 104.

The filtering module 122 is arranged to filter portions of the received media streams. The filtering module may be arranged to receive a configuration from a user defining which types of content is to be filtered, e.g. offensive words, violence, explicit scenes. The filtering module 122 may also be arranged to identify portions of content items to be filtered. Filtering may include skipping the content in the time span, pixelating a video stream of the content in the time span, removing the content in the time span from the media stream, censoring an audio stream of the content in the time span, censoring a subtitle stream of the content in the time span; and/or replacing the content in the time span. The output module 124 is arranged to output filtered media streams to the display device 106.

The content system 104 comprises a processor 140, a transmitter 142, a content database 144 and optionally a time stamp database 146. The transmitter 142, the content database 144 and the optional time stamp database 146 are each operatively connected to the processor 140.

The content database 144 stores content items such as TV show episodes and movies. The transmitter 142 is arranged to transmit media streams comprising one or more of the content items from the content database 144 to the control device 102. The transmitter 142 may transmit the media streams via over-the-air broadcast or via the internet.

The time stamp database 146 may store time spans (i.e. start times and corresponding end times) of portions of content items to be filtered, along with one or more tags relating to what the respective portion of the content item comprises, e.g. violence, guns, sex, that viewers may find offensive.

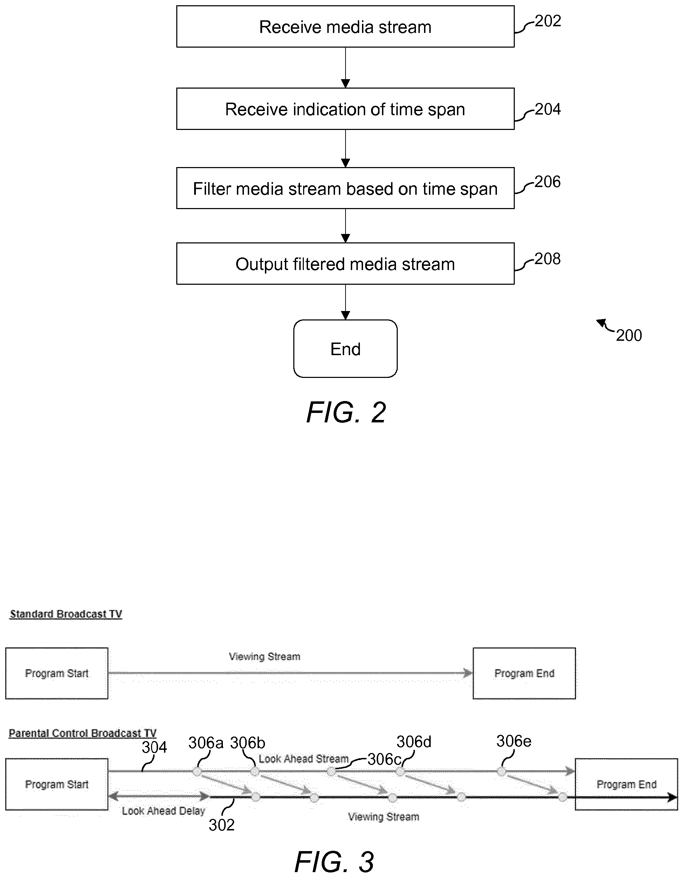

The transmitter 142 may be arranged to transmit time spans to the control device 102. The transmitter 142 may be arranged to transmit a version of a media stream to be sent to the control device 102. The version of the media stream comprises the content of the media stream is at a time offset ahead in time relative to the content of the media stream. The version of the media stream may comprise a lower data rate than the media stream. Figure 2 illustrates a method 200 of content management that may be carried out at the control device 102.

At step 202, the receiver 126 of the control device 102 receives a media stream, for example from the content system 104. The media stream comprises a content item having a potion to be filtered. At step 204, the control device 102 receives an indication of a time span of when the portion to be filtered occurs in the media stream.

In some examples, at step 204, the control device 102 receives data comprising the indication of the time span from the content system 104.

In some examples, at step 204, the control device 102 receives a version of the media stream prior to receiving the media stream. The version of the media stream comprises the content of the media stream at a time offset ahead in time relative to the content of the media stream. The filtering module 122 then detects the portion to be filtered from the version of the media stream. In some examples, at step 204, the filtering module 122 detects the portion to be filtered from the media stream received at step 202.

For example, the filtering module may carry out audio and/or speech recognition on an audio component of the media stream and identify a time span based on offensive keywords such as swear words detected in the audio.

Optionally, the detected time span is sent to the content server 104, for example so that the time span can be stored in the time stamp database 146 and used later as an indication of a time span of when the portion to be filtered occurs in the media stream. If these time spans are sent to other control devices as data to indicate the portion of the media stream to be filtered, the accuracy of the time span can be validated, for example by detecting whether the viewer stops playback of the media stream is a time period before and/or after the time span, which is indicative that the viewer found the content inappropriate or unsuitable and that the time span does not suitably cover the portion to be filtered.

At step 206, the filtering module 122 filters the media stream based on the indication of the time span. For example, the filtering module 122 may black out the time span from the media stream.

At step 208, the output module 124 outputs the filtered media stream to the display device 106. Prior to output of the filtered portion, the output module 124 may cause a notification to appear on the display device 106. Alternatively, the notification may be output to a secondary device as described in international patent application number PCT/US2018/050048 herein incorporated by reference in its entirety. The notification comprises a message that the upcoming portion of the media stream has been filtered. The output of the filtered media stream may be paused when the notification is output, i.e. before the portion of the media stream that is filtered is output.

Figure 3 illustrates an example of detection of content to be filtered from a media stream 302 from a version of the media stream 304 that is sent in advance to the control device 102. The version of the media stream 304 comprises five explicit words 306a to 306e. These are received at the control device 102 and are the time period to be filtered from the media stream is determined by the control device. The filtering module 122 then filters the time periods from the media stream 302 when it is received at the control device 102, for example by censoring out the audio content for the time periods identified from the version of the media stream 304. Any subtitles or metadata flagged as inappropriate may also be censored by removing the words altogether and replacing with a suitable substitute.

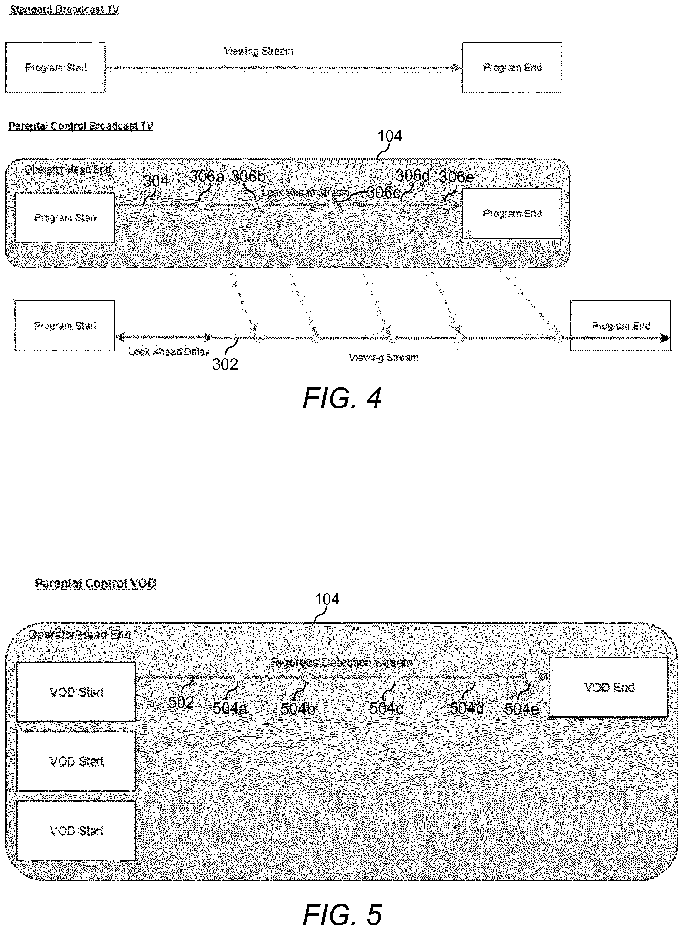

Figure 4 illustrates a variation of the example of Figure 3, in which the version of the media steam 304 is processed by the content system 104 and the content system 104 sends indications of the time spans of when the portions to be filtered 306a to 306e occur in the media stream 302. Alternatively, the processing of the version of the media stream 304 may be carried out at cloud or on servers at the same premises as the control device 102. Advantageously, this means that each individual control device does not have to perform the identification of content to be filtered, providing more consistent and accurate identification and detection. This also reduces the hardware and/or software limitations on the control device. An additional benefit is that all identified portions could be stored in a time stamp database such that future airings of the same content (e.g. +1 channels, network personal video recorder, etc.) would then be able to receive indications of time spans of when the portion to be filtered occurs in the media stream, for example, via WebVTT, enabling the control device to filter the portions from the media stream.

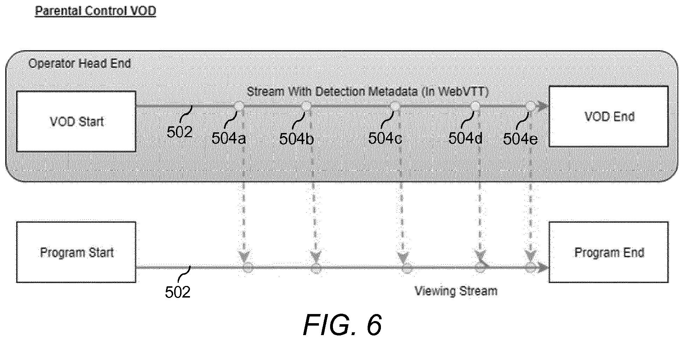

For Video On Demand, the time stamp database could be used, and these could be prepared well in advance of being available for viewing. Typically, the level of detection and accuracy of content to be filtered would be set to a much higher level here, meaning all shows, films and catchup TV would benefit from more detailed metadata. Figure 5 shows the preparation that may occur at the content system 104 to a Video On Demand media stream 502 to identify time periods of content to be filtered 504a to 504e. The identification and detection process may be similar to that carried out on broadcast media streams, but may have additional algorithms to detect content to be filtered which may require more processor time to identify content to be filtered. Figure 6 illustrates the media stream 502 that is received at the control device 102 as Video On Demand content. The control device 102 also receives, e.g. via WebWT, indications of time spans of when the portions to be filtered 504a to 504e occur in the media stream 502 based on the identification illustrated in Figure 5. The control device 102 can then filter the media stream 502 based on the indications of the time spans.

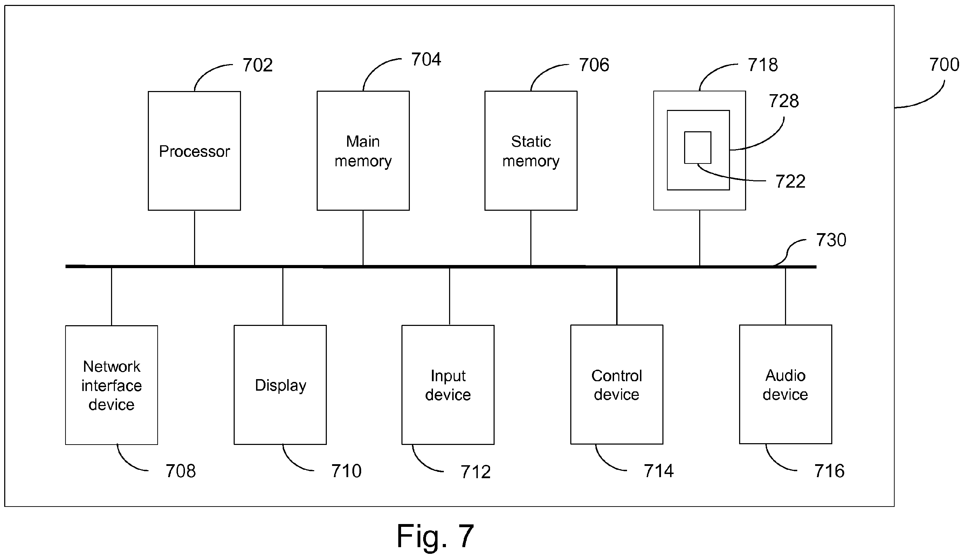

Figure 7 illustrates a block diagram of one implementation of a computing device 700 within which a set of instructions, for causing the computing device to perform any one or more of the methodologies discussed herein, may be executed. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 700 includes a processing device 702, a main memory 704 (e.g., read-only memory (ROM), flash memory, dynamic random access memory (DRAM) such as synchronous DRAM (SDRAM) or Rambus DRAM (RDRAM), etc.), a static memory 706 (e.g., flash memory, static random access memory (SRAM), etc.), and a secondary memory (e.g., a data storage device 718), which communicate with each other via a bus 730.

Processing device 702 represents one or more general-purpose processors such as a microprocessor, central processing unit, or the like. More particularly, the processing device 702 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 702 may also be one or more special-purpose processing devices such as an application specific integrated circuit (ASIC), a field programmable gate array (FPGA), a digital signal processor (DSP), network processor, or the like. Processing device 702 is configured to execute the processing logic (instructions 722) for performing the operations and steps discussed herein.

The computing device 700 may further include a network interface device 708. The computing device 700 also may include a video display unit 710 (e.g., a liquid crystal display (LCD) or a cathode ray tube (CRT)), an alphanumeric input device 712 (e.g., a keyboard or touchscreen), a cursor control device 714 (e.g., a mouse or touchscreen), and an audio device 716 (e.g., a speaker).

The data storage device 718 may include one or more machine-readable storage media (or more specifically one or more non-transitory computer-readable storage media) 728 on which is stored one or more sets of instructions 722 embodying any one or more of the methodologies or functions described herein. The instructions 722 may also reside, completely or at least partially, within the main memory 704 and/or within the processing device 702 during execution thereof by the computer system 700, the main memory 704 and the processing device 702 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "encrypting", "receiving", "determining", "comparing ", "generating", "sending," "identifying," or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method of filtering media content, the method comprising:
receiving a media stream comprising content, the content including a portion to be filtered;
receiving an indication of a time span of when the portion to be filtered occurs in the media stream;
filtering the media stream based on the indication of the time span; and
outputting the filtered media stream.

2. The computer-implemented method of claim 1, wherein receiving an indication of a time span comprises:
receiving, prior to receiving the media stream, a version of the media stream, wherein the version of the media stream comprises the content of the media stream at a time offset ahead in time relative to the content of the media stream, and wherein the version of the media stream comprises a lower data rate than the media stream; and
detecting the time span in the version of the media stream.

3. The computer-implemented method of claim 2, wherein the version of the media stream comprises an audio stream, and wherein detecting the time span comprises identifying keywords or sounds from the audio stream.

4. The computer-implemented method of any of claims 2 or 3, wherein the version of the media stream comprises a video stream, and wherein detecting the time span comprises identifying patterns from the video stream.

5. The computer-implemented method of claims 2 to 4, wherein the version of the media stream comprises a subtitle stream, and wherein detecting the time span comprises identifying keywords from the subtitle stream.

6. The computer-implemented method of claims 2 to 5, comprising sending the detected time span to a server.

7. The computer-implemented method of claim 1, wherein receiving an indication of a time span comprises receiving data comprising a start time of the time span and an end time of the time span.

8. The computer-implemented method of claim 7, wherein the start time of the time span and the end time of the time span are both within one content item in the media stream.

9. The computer-implemented method of claim 1, wherein receiving an indication of a time span comprises detecting the time span in the media stream.

10. The computer-implemented method of any preceding claim, wherein filtering the media stream comprises one or more of:
skipping the content in the time span;
pixelating a video stream of the content in the time span;
removing the content in the time span from the media stream censoring an audio stream of the content in the time span;
censoring a subtitle stream of the content in the time span; and
replacing the content in the time span.

11. The computer-implemented method of any preceding claim, wherein outputting the filtered media stream comprises outputting a notification before the time span, and wherein the notification comprises a message that the upcoming media stream is filtered.

12. The computer-implemented method of any preceding claim, wherein outputting the filtered media stream comprises pausing output of the media stream before the time span is output.

13. A device comprising a processor configured to perform the steps of the computer-implemented method of any of claims 1 to 12.

14. A computer-readable storage medium comprising instructions which, when executed by a computer, cause the computer to carry out the steps of the computer-implemented method of any of claims 1 to 12.
